# EUROPÄISCHE PATENTSCHRIFT

(11) **EP 1 305 507 B1**
(45) Veröffentlichungstag und Bekanntmachung des Hinweises auf die Patenterteilung: **15.06.2005**
(21) Anmeldenummer: 01943166.7
(22) Anmeldetag: 29.05.2001
(51) Int. Cl.: F02D 41/02, F01N 3/20, F01N 11/00

(54) **VERFAHREN ZUM BETREIBEN EINES KATALYSATORS**
METHOD FOR OPERATING A CATALYST
PROCEDE POUR FAIRE FONCTIONNER UN CATALYSEUR

(30) Priorität: 21.07.2000 DE 10035525
(43) Veröffentlichungstag der Anmeldung: 02.05.2003
(73) Patentinhaber: ROBERT BOSCH GMBH, 70442 Stuttgart (DE)
(72) Erfinder: SCHNAIBEL, Eberhard, 71282 Hemmingen (DE); BLUMENSTOCK, Andreas, 71638 Ludwigsburg (DE); WINKLER, Klaus, 71277 Rutesheim (DE)
(86) Internationale Anmeldenummer: PCT/DE2001/002036
(87) Internationale Veröffentlichungsnummer: WO 2002/008594

(56) Entgegenhaltungen:
- EP-A- 0 560 991
- DE-A- 2 444 334
- DE-A- 19 801 625
- DE-C- 19 844 082
- PATENT ABSTRACTS OF JAPAN vol. 1997, no. 01, 31. Januar 1997 (1997-01-31) -& JP 08 232644 A (TOYOTA MOTOR CORP), 10. September 1996 (1996-09-10)

## Beschreibung

### Stand der Technik

Die vorliegende Erfindung betrifft ein Verfahren zum Betreiben eines in dem Abgas einer Brennkraftmaschine angeordneten Katalysators. Der Katalysator umfasst einen zur Speicherung von Stickoxiden (NOx) fähigen Katalysator und/oder einen zur Speicherung von Sauerstoff fähigen Katalysator. Die Zusammensetzung des Abgases wird durch Zugabe von Reduktionsmittel, durch das eine Regeneration des Katalysators gefördert wird, vor dem Katalysator beeinflusst. Die Zusammensetzung des Abgases wird mit Hilfe eines dem Katalysator nachgeordneten Abgassensors erfasst. Ein Zeitverzug zwischen dem Beginn des Beeinflussens der Zusammensetzung des Abgases vor dem Katalysator und dem Erfassen einer Änderung der Zusammensetzung nach dem Katalysator wird durch Auswerten des Gradienten eines Ausgangssignals des Abgassensors ausgewertet.

Die vorliegende Erfindung betrifft außerdem ein Steuergerät für eine Brennkraftmaschine mit einem in dem Abgas der Brennkraftmaschine angeordneten Katalysator. Der Katalysator umfasst einen zur Speicherung von Stickoxiden (NOx) fähigen Katalysator und/oder einen zur Speicherung von Sauerstoff fähigen Katalysator. Das Steuergerät weist auf:
- Mittel zum Beeinflussen der Zusammensetzung des Abgases vor dem Katalysator durch Zugabe von Reduktionsmittel, durch das eine Regeneration des Katalysators gefördert wird,
- Mittel zum Erfassen einer Änderung der Zusammensetzung des Abgases nach dem Katalysator durch Auswerten des Gradienten eines Ausgangssignals eines dem Katalysator nachgeordneten Abgassensors und
- Mittel zum Erfassen eines Zeitverzugs zwischen dem Beginn des Beeinflussens der Zusammensetzung des Abgases vor dem Katalysator und einer Änderung der Zusammensetzung des Abgases nach dem Katalysator.

Des Weiteren betrifft die vorliegende Erfindung ein Speicherelement, insbesondere ein Read-Only-Memory oder ein Flash-Memory, für ein solches Steuergerät.

Schließlich betrifft die vorliegende Erfindung eine Brennkraftmaschine mit einem in dem Abgas der Brennkraftmaschine angeordneten Katalysator, der einen zur Speicherung von Stickoxiden (NOx) fähigen Katalysator und/oder einen zur Speicherung von Sauerstoff fähigen Katalysator umfasst, mit einem dem Katalysator nachgeordneten Abgassensor und mit einem Steuergerät. Das Steuergerät weist auf:
- Mittel zum Beeinflussen der Zusammensetzung des Abgases vor dem Katalysator durch Zugabe von Reduktionsmittel, durch das eine Regeneration des Katalysators gefördert wird,
- Mittel zum Erfassen einer Änderung der Zusammensetzung des Abgases nach dem Katalysator durch Auswerten des Gradienten eines Ausgangssignals des Abgassensors und
- Mittel zum Erfassen eines Zeitverzugs zwischen dem Beginn des Beeinflussens der Zusammensetzung des Abgases vor dem Katalysator und einer Änderung der Zusammensetzung des Abgases nach dem Katalysator.

In einem Betriebsbereich einer Brennkraftmaschine bei einem mageren Kraftstoff-Luft-Gemisch (Lambda > 1) kann ein herkömmlicher 3-Wege-Katalysator die Anforderungen an eine Stickoxidumsetzung nicht mehr erfüllen. Hier kommen NOx-Speicherkatalysatoren zum Einsatz, die in einem mageren Betrieb der Brennkraftmaschine emittierte Stickoxide speichern. Durch einen Betrieb der Brennkraftmaschine in einem fetten Bereich (Lambda < 1) werden gespeicherte Nitrate freigesetzt und zu Stickstoff reduziert. Die Verwendung eines NOx-Speicherkatalysators in diesem Zusammenhang ist bspw. aus der EP 0 560 991 B1 bekannt.

Gesetzgeberische Forderungen sehen eine On-Board-Diagnose von schadstoffemissionsrelevanten Kraftfahrzeugkomponenten wie Katalysatoren vor. In diesem Zusammenhang ist es z.B. aus der DE 24 44 334 bekannt, die Ausgangssignale einer vor und einer hinter dem Katalysator angeordneten sauerstoffempfindlichen Abgassonde zur Beurteilung eines 3-Wege-Katalysators heranzuziehen. Das bekannte Verfahren basiert auf der Sauerstoffspeicherfähigkeit eines funktionsfähigen 3-Wege-Katalysators. Die DE 24 44 334 offenbart in diesem Zusammenhang eine Veränderung der Kraftstoff-Luft-Gemischzusammensetzung von Lambda=0,95 (fettes, kraftstoffreiches Gemisch; Sauerstoffmangel) zu Lambda=1,05 (mageres, kraftstoffarmes Gemisch; Sauerstoffüberschuss). Der vor dem Katalysator angeordnete Abgassensor reagiert auf die Veränderung der Kraftstoff-Luft-Gemischzusammensetzung nahezu verzögerungslos. Aufgrund des bei Lambda=0,95 vorherrschenden Sauerstoffmangels im Abgas sind die Sauerstoffspeicherplätze des Katalysators zunächst nicht besetzt. Nach dem Umschalten auf Magerbetrieb (Sauerstoffüberschuss) vor dem Katalysator werden die Sauerstoffspeicherplätze sukzessive belegt. Hinter dem Katalysator herrscht daher nach der Veränderung der Gemischzusammensetzung zunächst weiter Sauerstoffmangel. Nach einer von der Sauerstoffspeicherfähigkeit des Katalysators abhängigen Zeitspanne tritt auch hinter dem Katalysator Sauerstoffüberschuss auf, der eine Änderung des Signals des hinteren Abgassensors auslöst. Der Zeitverzug, d.h. die Phasenverschiebung zwischen den Reaktionen beider Abgassensoren, wird mit abnehmender Sauerstoffspeicherfähigkeit des Katalysators kleiner und kann daher zur Beurteilung des Sauerstoffspeicherfähigkeit zur Diagnose des Katalysators verwendet werden.

Auf einen Katalysator, der neben einer Speicherfähigkeit für Sauerstoff auch eine Speicherfähigkeit für Stickoxide (NOx) besitzt, ist dieses bekannte Verfahren nicht ohne weiteres übertragbar. Derartige Katalysatoren können üblicherweise noch Stickoxide speichern, wenn ihre Sauerstoffspeicherfähigkeit bereits erschöpft ist und ein hinter dem Katalysator angeordneter Abgassensor einen Sauerstoffüberschuss anzeigt. Der Zeitverzug zwischen den Reaktionen beider Abgassensoren nach einer Veränderung der Gemischzusammensetzung von fettem auf mageres Gemisch liefert daher bei NOx-Speicherkatalysatoren keine Aussage über ihre NOx-Speicherfähigkeit.

Brennkraftmaschinen mit Benzin-Direkteinspritzung bieten den Vorteil verringerter Kohlendioxid (CO₂)-Emissionen. Da diese Brennkraftmaschinen überwiegend mit magerem Kraftstoff-Luft-Gemisch betrieben werden, sind sie mit einem Stickoxid (NOx)-Speicherkatalysator versehen, der die in der mageren Gemischphase entstehenden NOx-Emissionen einspeichert und der durch Betreiben der Brennkraftmaschine mit fettem Gemisch von den eingespeicherten Stickoxiden regeneriert wird. Da benzindirekteinspritzende Brennkraftmaschinen auch bei Lambda=1 betrieben werden, weisen die NOx-Speicherkatalysatoren in der Regel auch eine Speicherfähigkeit für Sauerstoff auf. Zur Speicherung von Sauerstoff kann bspw. ein herkömmlicher 3-Wege-Katalysator eingesetzt werden.

Da die Speicherfähigkeit eines Katalysators an Stickoxiden beschränkt ist, muss der Katalysator von Zeit zu Zeit regeneriert werden. Die Zeitpunkte für Beginn und Ende der Regeneration sind wichtig für die hinter dem Katalysator in die Umwelt ausgestoßenen Emissionen. Während eines Magerbetriebs einer Brennkraftmaschine wird sowohl der NOx-Speicherkatalysator mit Stickoxiden als auch der 3-Wege-Katalysator mit Sauerstoff gefüllt. Der Beginn der Regenerationsphase wird über ein NOx-Einspeichermodell festgelegt. Dieses modelliert die in den NOx-Speicherkatalysator eingebrachte Stickoxidmenge und modelliert so dessen NOx-Füllstand. Überschreitet die modellierte Größe eine vorgebbare Schwelle, wird eine Regenerationsphase (Betrieb der Brennkraftmaschine mit fettem Gemisch) eingeleitet.

Es hat sich gezeigt, dass bei einem Betrieb der Brennkraftmaschine mit fettem Gemisch zuerst der NOx-Speicherkatalysator entleert wird, bevor der Sauerstoffspeicher komplett geleert ist. Wenn so lange regeneriert wird, bis der Sauerstoffspeicher vollständig entleert ist, entstehen dadurch hohe Kohlenwasserstoff (HC)-Emissionen, da das fette Gemisch nicht mehr durch den Sauerstoffspeicher abgepuffert wird. Aus diesem Grund ist es wichtig, den Katalysator lediglich so lange zu regenerieren, bis der NOx-Speicher geleert ist, der Sauerstoffspeicher sollte jedoch noch nicht geleert sein. Dies stellt eine kohlenwasserstoffoptimale Regenerierung dar.

Aus der DE 198 01 625 Al ist es bekannt, die Regenerationsphase zu beenden, wenn ein Ausgangssignal, insbesondere eine Ausgangsspannung, des hinter dem Katalysator angeordneten Abgassensors einen vorgebbaren Schwellenwert überschreitet. Dann wird davon ausgegangen, dass der NOx-Speicher vollständig, der Sauerstoffspeicher jedoch noch nicht vollständig entleert ist. Dieses bekannte Verfahren hat jedoch den Nachteil, dass das Ausgangssignal des Abgassensors gewissen Schwankungen unterworfen ist und deshalb den vorgegebenen Schwellenwert zu verschiedenen Zeitpunkten überschreiten kann. Die Schwankungen des Ausgangssignals haben ihre Ursache in Fertigungstoleranzen und Temperaturschwankungen des Abgassensors.

Ein Verfahren, ein Steuergerät und eine Brennkraftmaschine der eingangs genannten Art sind aus der JP 08-232 644 bekannt. Dort wird offenbart, den Zeitpunkt der Regeneration eines Katalysators, der Sauerstoff und/oder NOx speichert, durch Auswerten eines Gradienten einer Sauerstoff-Sonde zu ermitteln.

Ausgehend von diesem Stand der Technik liegt der vorliegenden Erfindung die Aufgabe zugrunde, das Ende einer Regenerationsphase des Katalysators möglichst sicher und zuverlässig feststellen zu können.

Zur Lösung dieser Aufgabe schlägt die Erfindung ausgehend von dem Verfahren der eingangs genannten Art vor, dass der Stickoxid (NOx)-Katalysator und/oder der Sauerstoff-Katalysator dann als regeneriert gewertet wird, wenn der Gradient des Ausgangssignals des Abgassensors zunächst einen vorgebbaren ersten Grenzwert überschreitet und dann einen vorgebbaren zweiten Grenzwert unterschreitet.

### Vorteile der Erfindung

Gemäß der vorliegenden Erfindung wird also nicht das Überschreiten eines Schwellenwertes durch das Ausgangssignal des Abgassensors als Kriterium für das Ende der Regenerationsphase herangezogen, sondern vielmehr die Steigung des Ausgangssignals. Dadurch kann das Ende der Regenerationsphase wesentlich sicherer und zuverlässiger und vor allem unabhängig von Fertigungstoleranzen und Temperaturschwankungen des Abgassensors bestimmt werden. Mit dem erfindungsgemäßen Verfahren kann stets ein besonders emissionsarmer Betrieb der Brennkraftmaschine sichergestellt werden.

Das erfindungsgemäße Verfahren kann bei herkömmlichen 3-Wege-Katalysatoren ebenso wie bei moderneren NOx-Speicherkatalysatoren mit oder ohne Speicherfähigkeit für Sauerstoff angewandt werden. Bei 3-Wege-Katalysatoren kann mit dem erfindungsgemäßen Verfahren der geleerte Sauerstoffspeicher durch Auswerten einer charakteristischen Änderung des Gradienten des Ausgangssignals des Abgassensors detektiert werden. Bei einem NOx-Speicherkatalysator kann das Ende der NOx-Regenerationsphase bestimmt werden. Falls der NOx-Speicherkatalysator auch eine Speicherfähigkeit für Sauerstoff aufweist, kann zudem das Ende der Sauerstoffspeicher-Regenerationsphase bestimmt werden.

Ein zur Speicherung von Stickoxiden fähiger Katalysator kann dann als regeneriert gewertet werden, wenn der Gradient des Ausgangssignals des Abgassensors einen vorgebbaren ersten Grenzwert überschreitet. Zu Beginn der Regenerationsphase wird Reduktionsmittel zu dem Abgas hinzugegeben. Dazu kann die Brennkraftmaschine bspw. mit einem fetten Kraftstoff-Luft-Gemisch (Lambda ≤ 1) betrieben werden. Durch die fette Gemischeinstellung wird in dem Abgas vor dem Katalysator ein Überschuss an Kohlenwasserstoffen (HC) und Kohlenmonoxid (CO) erzeugt. Bei einer fetten Gemischeinstellung laufen die folgenden Prozesse ab: die Kohlenwasserstoffe und das Kohlenmonoxid reduzieren die gespeicherten Stickoxide. Der in Form von Stickoxiden gebundene und gespeicherte Sauerstoff wird zusammen mit dem übrigen im Katalysator gespeicherten Sauerstoff freigesetzt, so dass der Sauerstoffüberschuss hinter dem Katalysator zunächst aufrechterhalten bleibt. Somit bleibt auch das Ausgangssignal des nach dem Katalysator angeordneten Abgassensors zunächst auf einem dem Sauerstoffüberschuss entsprechenden Niveau. Sobald die in dem Katalysator gespeicherten Stickoxide regeneriert sind, reduziert sich jedoch der Sauerstoffanteil in dem Abgas hinter dem Katalysator und das Ausgangssignal des Abgassensors steigt entsprechend an. Wenn die Steigung des Ausgangssignals eine gewisse Steigung erreicht hat, d.h. wenn der Gradient des Ausgangssignals den ersten Grenzwert überschritten hat, wird der Katalysator als regeneriert gewertet.

Erfindungsgemäß wird ein zur Speicherung von Stickoxiden fähiger Katalysator dann als regeneriert gewertet, wenn der Gradient des Ausgangssignals des Abgassensors zunächst einen vorgebbaren ersten Grenzwert überschreitet und dann einen vorgebbaren zweiten Grenzwert unterschreitet. Das Ausgangssignal des hinter dem Katalysator angeordneten Abgassensors steigt gegen Ende der Stickoxid-Regenerationsphase relativ steil an, um dann während der Sauerstoff-Regenerationsphase auf einem relativ konstanten Niveau zu verharren. Gemäß dieser erfindungsgemäßen Ausführungsform wird also zunächst der starke Anstieg des Ausgangssignals (Gradient des Ausgangssignals überschreitet den ersten Grenzwert) und dann der Übergang auf das im Wesentlichen konstante Niveau (Gradient des Ausgangssignals unterschreitet den zweiten Grenzwert) ermittelt.

Alternativ oder zusätzlich kann ein zur Speicherung von Sauerstoff fähiger Katalysator auch dann als regeneriert gewertet werden, wenn der Gradient des Ausgangssignals des Abgassensors im Anschluss an das Überschreiten des erste Grenzwerts und das Unterschreiten des zweiten Grenzwerts einen vorgebbaren dritten Grenzwert wieder überschreitet. Gegen Ende der Sauerstoff-Regenerationsphase steigt das Ausgangssignal des hinter dem Katalysator angeordneten Abgassensors noch einmal von dem im Wesentlichen konstanten Niveau relativ stark an. Das hat seine Ursache in einem Sauerstoffmangel hinter dem Katalysator gegen Ende der Sauerstoff-Regenerationsphase. Dieser relativ starke Anstieg des Ausgangssignals (Gradient des Ausgangssignals überschreitet den dritten Grenzwert) wird ermittelt und als ein Zeichen für ein Ende der Sauerstoff-Regenerationsphase gewertet.

Des weiteren kann ein zur Speicherung von Sauerstoff fähiger Katalysator dann als regeneriert gewertet werden, wenn der Gradient des Ausgangssignals des Abgassensors zunächst einen vorgebbaren dritten Grenzwert überschreitet und dann einen vorgebbaren vierten Grenzwert unterschreitet. Das Ausgangssignal des hinter dem Katalysator angeordneten Abgassensors steigt gegen Ende der Sauerstoff-Regenerationsphase relativ steil an, um dann nach Erreichen eines Maximums wieder relativ steil abzufallen. Dieser Übergang von dem relativ steilen Anstieg (Gradient des Ausgangssignals überschreitet dritten Grenzwert) in das Maximum wird gemäß dieser alternativen Weiterbildung detektiert. Beim Übergang in das Maximum verringert sich die Steigung des Ausgangssignals. Wenn die Steigung des Ausgangssignals den vierten Grenzwert unterschreitet, wird dies als ein Zeichen für das Ende der Sauerstoff-Regenerationsphase gewertet.

Falls der Katalysator neben seiner Fähigkeit zur Speicherung von Sauerstoff auch zur Speicherung von Stickoxiden fähig ist, kann durch Auswerten des Gradienten des Ausgangssignals zunächst das Ende der Stickoxid-Regenerationsphase und dann das Ende der Sauerstoff-Regenerationsphase ermittelt werden. Bei einem lediglich zur Speicherung von Sauerstoff fähigen Katalysator entfällt die Diagnose der Stickoxid-Regenerationsphase. Auch bei einem solchen reinen Sauerstoffspeicher bietet das erfindungsgemäße Verfahren jedoch entscheidende Vorteile, da durch Auswertung des Gradienten des Ausgangssignals das Ende der Sauerstoff-Regenerationsphase wesentlich sicherer und zuverlässiger erkannt werden kann.

Die Zugabe des Reduktionsmittels zu dem Abgas kann auf unterschiedliche Weise erfolgen. Gemäß einer bevorzugten Ausführungsform der vorliegenden Erfindung wird vorgeschlagen, dass die Brennkraftmaschine zur Zugabe des Reduktionsmittels zu dem Abgas mit einem fetten Kraftstoff-Luft-Gemisch betrieben wird. Vorteilhafterweise werden als Reduktionsmittel Kohlenwasserstoffe (HC) und/oder Kohlenmonoxid (CO) zu dem Abgas gegeben.

Alternativ wird gemäß einer weiteren bevorzugten Ausführungsform der vorliegenden Erfindung vorgeschlagen, dass als Reduktionsmittel Harnstoff zu dem Abgas gegeben wird. Dabei wird zur Reduktion des Stickoxids zu Sauerstoff und Stickstoff Ammoniak aus dem Harnstoff verwendet. Der Ammoniak kann per Hydrolyse aus einer Harnstofflösung gewonnen werden.

Von besonderer Bedeutung ist die Realisierung des erfindungsgemäßen Verfahrens in Form eines Steuerelements, das für ein Steuergerät einer Brennkraftmaschine insbesondere eines Kraftfahrzeugs vorgesehen ist. Dabei ist auf dem Steuerelement ein Programm abgespeichert, das auf einem Rechengerät, insbesondere auf einem Mikroprozessor, abläuffähig und zur Ausführung des erfindungsgemäßen Verfahrens programmiert ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. ein Read-Only-Memory oder ein Flash-Memory.

Zur Lösung der Aufgabe der vorliegenden Erfindung wird ausgehend von dem Steuergerät der eingangs genannten Art des Weiteren vorgeschlagen, dass das Steuergerät den Stickoxid (NOx)-Katalysator und/oder den Sauerstoff-Katalysator dann als regeneriert wertet, wenn der Gradient des Ausgangssignals des Abgassensors zunächst einen vorgebbaren ersten Grenzwert überschreitet und dann einen vorgebbaren zweiten Grenzwert unterschreitet.

Schließlich wird zur Lösung der Aufgabe der vorliegenden Erfindung ausgehend von der Brennkraftmaschine der eingangs genannten Art vorgeschlagen, dass das Steuergerät den Stickoxid (NOx)-Katalysator und/oder den Sauerstoff-Katalysator dann als regeneriert wertet, wenn der Gradient des Ausgangssignals des Abgassensors zunächst einen vorgebbaren ersten Grenzwert überschreitet und dann einen vorgebbaren zweiten Grenzwert unterschreitet..

Gemäß einer vorteilhaften Weiterbildung der vorliegenden Erfindung wird vorgeschlagen, dass der Abgassensor als ein sauerstoffempfindlicher Sensor ausgebildet ist. Ein solcher Abgassensor misst den im Abgas enthaltenen Sauerstoffanteil und gibt eine entsprechende Ausgangsspannung als Ausgangssignal aus. Ein solcher Sensor ist bspw. ein an sich aus dem Stand der Technik bekannter Lambda-Sensor. Der Abgassensor ist vorteilhafterweise als ein Zweipunkt-Sensor ausgebildet.

Gemäß einer bevorzugten Ausführungsform der vorliegenden Erfindung wird vorgeschlagen, dass der Katalysator zur Speicherung von Sauerstoff fähig ist. Ein solcher Katalysator ist bspw. ein herkömmlicher 3-Wege-Katalysator, wie er an sich aus dem Stand der Technik bekannt ist. Des Weiteren wird vorgeschlagen, dass der Katalysator alternativ oder zusätzlich zu seiner Fähigkeit, Sauerstoff zu speichern, zur Speicherung von Stickoxid fähig ist.

### Zeichnung

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein schematisches Blockschaltbild einer erfindungsgemäßen Brennkraftmaschine gemäß einer bevorzugten Ausführungsform; und
- Figur 2: die Verläufe verschiedener Signale während der Ausführung des erfindungsgemäßen Verfahrens.

### Beschreibung der Ausführungsbeispiele

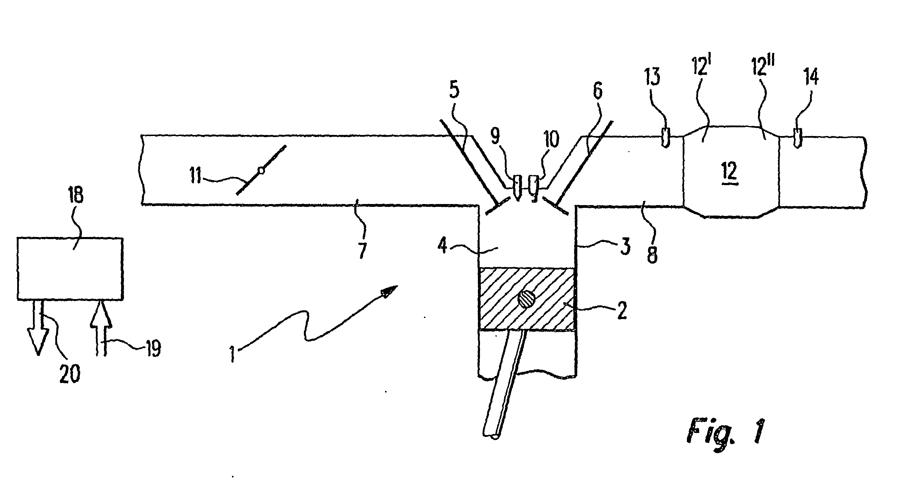

In Figur 1 ist eine direkteinspritzende Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der u.a. durch den Kolben 2, ein Einlassventil 5 und ein Auslassventil 6 begrenzt ist. Mit dem Einlassventil 5 ist ein Ansaugrohr 7 und mit dem Auslassventil 6 ein Abgasrohr 8 gekoppelt.

Im Bereich des Einlassventils 5 und des Auslassventils 6 ragen ein Kraftstoffeinspritzventil 9 und eine Zündkerze 10 in dem Brennraum 4. Über das Einspritzventil 9 kann Kraftstoff in dem Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der die durch die Verbrennung des Kraftstoffs entstehenden Abgase reinigt. Bei dem Katalysator 12 handelt es sich um einen Stickoxid (NOx)-Speicherkatalysator 12', der mit einem 3-Wege-Katalysator 12'' als Sauerstoffspeicher gekoppelt ist.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflusst werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory, ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff-Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb u.a. von der Stellung der Drosselklappe 11 ab. Im Hinblick auf eine geringe Schadstoffentwicklung wird das Kraftstoff-Luft-Gemisch möglichst auf Lambda=1 eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wir mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen. Im Schichtbetrieb ist Lambda üblicherweise > 1.

Während des Schichtbetriebs wird der Speicherkatalysator 12' mit Stickoxiden und der 3-Wege-Katalysator 12'' mit Sauerstoff beladen. In einer Regenerationsphase werden der Speicherkatalysator 12' und der 3-Wege-Katalysator 12'' wieder entladen, so dass sie in einem nachfolgenden Schichtbetrieb erneut Stickoxide bzw. Sauerstoff aufnehmen können. Während der Regenerationsphase wird vor dem Katalysator 12 ein Reduktionsmittel in das Abgas gegeben. Als Reduktionsmittel können bspw. Kohlenwasserstoffe (HC), Kohlenmonoxid (CO) oder Harnstoff verwendet werden. Kohlenwasserstoffe und Kohlenmonoxid werden im Abgas durch eine fette Gemischeinstellung (Betrieb der Brennkraftmaschine im Homogenbetrieb) erzeugt. Harnstoff kann aus einem Vorratsbehälter dem Abgas gesteuert zudosiert werden. Während der Regenerationsphase des Katalysators 12 laufen folgende Prozesse ab: Das Reduktionsmittel reduziert die gespeicherten Stickoxide zu Stickstoff und Sauerstoff. Diese Stoffe treten aus dem Katalysator 12 heraus, so dass sich hinter dem Katalysator 12 während der Regenerationsphase ein Sauerstoffüberschuss ergibt.

Vor dem Katalysator 12 ist ein erster Abgassensor 13 und nach dem Katalysator 12 ein zweiter Abgassensor 14 in dem Abgasrohr 8 angeordnet. Als hinter dem Katalysator 12 angeordneter Abgassensor 14 kann eine übliche, sauerstoffempfindliche Lambdasonde oder ein Kohlenwasserstoff-Sensor eingesetzt werden. Der hintere Abgassensor 14 kann als ein Zweipunkt-Sensor ausgebildet sein.

Nach dem Umschalten auf Sauerstoffmangel (Betrieb der Brennkraftmaschine 1 mit fettem Gemisch) vor dem Katalysator 12 zu Beginn der Regenerationsphase reagiert der vor dem Katalysator 12 angeordnete Abgassensor 13 praktisch verzögerungslos. Aufgrund des während des Schichtbetriebs vorherrschenden Sauerstoffüberschusses in dem Abgas sind die Sauerstoffspeicherplätze des Katalysators 12 zunächst nahezu alle besetzt. Nach dem Umschalten auf Sauerstoffmangel vor dem Katalysator 12 zu Beginn der Regenerationsphase werden die Sauerstoffspeicherplätze sukzessive von Sauerstoff befreit und der Sauerstoff tritt aus dem Katalysator 12 heraus. Hinter dem Katalysator 12 herrscht daher nach dem Umschalten in die Regenerationsphase zunächst weiter Sauerstoffüberschuss. Nach einer von der Sauerstoffspeicherfähigkeit des Katalysators 12 abhängigen Zeitspanne tritt auch hinter dem Katalysator 12 Sauerstoffmangel auf, der eine Änderung des Ausgangssignals des hinteren Abgassensors 14 bewirkt.

Hinter dem Katalysator 12 tritt erst dann Sauerstoffmangel auf, wenn sowohl die Stickoxidspeicherplätze in dem Stickoxid-Speicherkatalysator 12' als auch die Sauerstoffspeicherplätze in dem 3-Wege-Katalysator leer sind. Wird der Katalysator 12 bspw. durch ein Betrieb der Brennkraftmaschine 1 mit einem mageren Gemisch (Lambda > 1) zunächst mit Sauerstoff und Stickoxiden gefüllt und werden dann zur Regeneration des Katalysators 12 Kohlenwasserstoffe und Kohlenmonoxid im Abgas durch eine fette Gemischeinstellung (Lambda < 1) erzeugt, laufen folgende Prozesse ab: die Kohlenwasserstoffe und das Kohlenmonoxid reduzieren die gespeicherten Stickoxide zu Stickstoff und Sauerstoff. Der in Form von Stickoxiden gebundene und gespeicherte Sauerstoff wird zusammen mit dem übrigen im Katalysator 12 gespeicherten Sauerstoff freigesetzt, so dass der Sauerstoffüberschuss hinter dem Katalysator 12 zunächst aufrechterhalten bleibt.

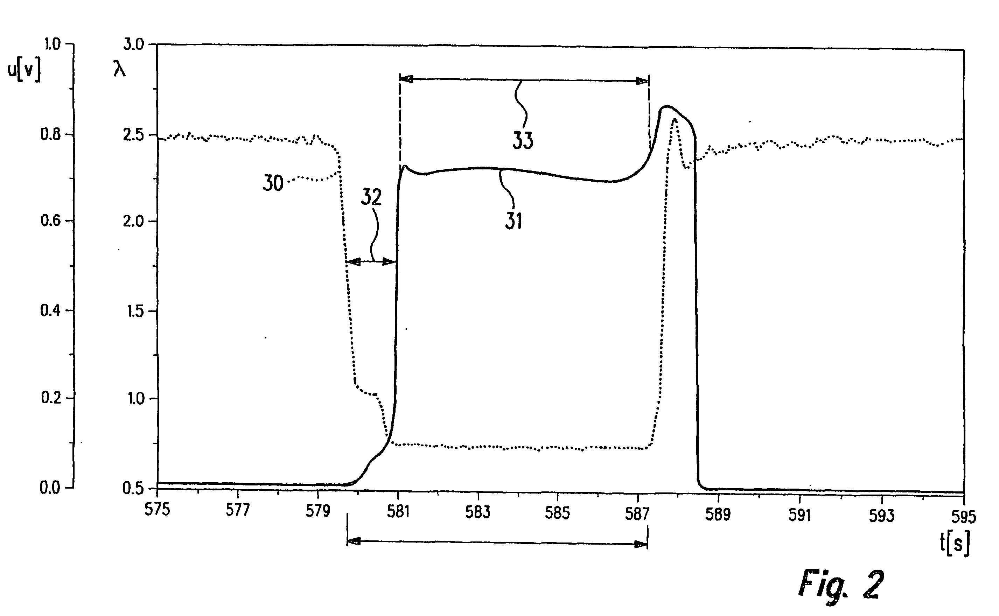

In Figur 2 ist die Kraftstoff-Luft-Gemischzusammensetzung vor dem Katalysator 12 anhand des Verlaufs des entsprechenden Lambda-Wertes 30 vor dem Katalysator 12 veranschaulicht. Ebenso ist in Figur 2 der Verlauf des Ausgangssignals U des hinteren Abgassensors 14 dargestellt und mit dem Bezugszeichen 31 bezeichnet. Zu Beginn des in Figur 2 dargestellten Signalverlaufs wird die Brennkraftmaschine 1 mit einer mageren Gemischzusammensetzung (Lambda ∼ 2,5) betrieben. Wie oben bereits beschrieben, herrscht dabei hinter dem Katalysator 12 ein Sauerstoffüberschuss. Das Ausgangssignal 31 des hinteren Abgassensors 14 liegt etwa auf 0 Volt. Etwa zu dem Zeitpunkt t = 579 sek. wird der Kraftstoffanteil in dem Kraftstoff-Luft-Gemisch erhöht und die Brennkraftmaschine 1 mit einem fetten Gemisch betrieben. Der Lambda-Wert 30 vor dem Katalysator 12 sinkt auf einen Wert von etwa 0,75. Das Ausgangssignal 31 des hinteren Abgassensors 14 bleibt zunächst auf einem niedrigen Wert.

Erst nachdem die in dem Stickoxid-Speicherkatalysator 12' eingelagerten Stickoxide zu Stickstoff reduziert sind, also erst wenn die Regenerationsphase des Stickoxid-Speicherkatalysators 12' beendet ist, verringert sich der Sauerstoffanteil in dem Abgas hinter dem Katalysator 12. Das resultiert in einem deutlich sichtbaren Anstieg des Ausgangssignals 31 des Abgassensors 14 von etwa 0 Volt auf ein im Wesentlichen konstantes Niveau bei etwa 0,7 Volt. Die Regenerationsphase des Stickoxid-Speicherkatalysators 12' ist in Figur 2 mit dem Bezugszeichen 32 bezeichnet.

Gemäß der vorliegenden Erfindung wird auf das Ende der Regenerationsphase 32 des Stickoxid-Speicherkatalysators 12' geschlossen, wenn der Gradient des Ausgangssignals 31 des Abgassensors 14 einen vorgebbaren Grenzwert überschreitet, wenn also die Steigung des Ausgangssignals 31 einen bestimmten Wert erreicht hat. Alternativ kann auf das Ende der Regenerationsphase 32 geschlossen werden, wenn der Gradient des Ausgangssignals 31 des Abgassensors 14 zunächst einen vorgebbaren ersten Grenzwert überschreitet und dann einen vorgebbaren zweiten Grenzwert unterschreitet, die Steigung des Ausgangssignals 31 also wieder unterhalb eines bestimmten Wertes fällt. Gemäß dieser alternativen Ausbildungsform kann ein Übergang des Verlaufs des Ausgangssignals 31 von dem relativ steilen Anstieg zu einem im Wesentlichen konstanten Niveau während der Sauerstoff-Regenerationsphase 33 detektiert (ein Wendepunkt des Verlaufs des Ausgangssignals 31) werden.

Gegen Ende der Sauerstoff-Regenerationsphase 33 fällt der Sauerstoffanteil in dem Abgas nach dem Katalysator 12 weiter ab, was zu einem weiteren Anstieg des Ausgangssignals 31 des Abgassensors 14 führt. Zur Detektion des Endes der Sauerstoff-Regenerationsphase 33 wird dieser Anstieg des Ausgangssignals 31 ermittelt. Insbesondere wird auf ein Ende der Sauerstoff-Regenerationsphäse geschlossen, wenn der Gradient des Ausgangssignals 31 des Abgassensors 14 einen vorgebbaren dritten Grenzwert überschreitet, wenn der Verlauf des Ausgangssignals 31 also eine bestimmte Steigung überschreitet. Alternativ kann auf ein Ende der Sauerstoff-Regenerationsphase 33 geschlossen werden, wenn der Gradient des Ausgangssignals 31 des Abgassensors 14 zunächst einen vorgebbaren dritten Grenzwert überschreitet und dann einen vorgebbaren vierten Grenzwert wieder unterschreitet.

Mit dem erfindungsgemäßen Verfahren kann in einem Stickoxid-Speicherkatalysator 12' ein Ende der Stickoxid-Regenerationsphase und in einem 3-Wege-Katalysator das Ende einer Sauerstoff-Regenerationsphase 33 sicher und zuverlässig und vor allem unabhängig von Schwankungen des Ausgangssignals 31 des Abgassensors 14 aufgrund von Fertigungstoleranzen oder Temperaturschwankungen ermittelt werden. Bei einem Katalysator 12, der sowohl zur Speicherung von Sauerstoff als auch zur Speicherung von Stickoxid fähig ist, kann durch Auswerten des Gradienten des Ausgangssignals 31 zunächst das Ende der Stickoxid-Regenerationsphase 32 und dann das Ende der Sauerstoff-Regenerationsphase 33 ermittelt werden.

## Patentansprüche

1. Verfahren zum Betreiben eines in dem Abgas einer Brennkraftmaschine (1) angeordneten Katalysators (12), der einen zur Speicherung von Stickoxiden (NOx) fähigen Katalysator (12') und/oder einen zur Speicherung von Sauerstoff fähigen Katalysator (12'') umfasst, wobei die Zusammensetzung des Abgases durch Zugabe von Reduktionsmittel, durch das eine Regeneration des Katalysators (12) gefördert wird, vor dem Katalysator (12) beeinflusst und die Zusammensetzung des Abgases mit Hilfe eines dem Katalysator (12) nachgeordneten Abgassensors (14) erfasst wird und ein Zeitverzug zwischen dem Beginn des Beeinflussens der Zusammensetzung des Abgases vor dem Katalysator (12) und dem Erfassen einer Änderung der Zusammensetzung nach dem Katalysator (12) durch Auswerten des Gradienten eines Ausgangssignals (31) des Abgassensors (14) ausgewertet wird, **dadurch gekennzeichnet, dass** der Stickoxid (NOx)-Katalysator (12') und/oder der Sauerstoff-Katalysator (12") dann als regeneriert gewertet wird, wenn der Gradient des Ausgangssignals (31) des Abgassensors (14) zunächst einen vorgebbaren ersten Grenzwert überschreitet und dann einen vorgebbaren zweiten Grenzwert unterschreitet.

2. Verfahren nach Anspruch 1, **dadurch gekennzeichnet, dass** die Brennkraftmaschine (1) zur Zugabe des Reduktionsmittels zu dem Abgas mit einem fetten Kraftstoff/Luft-Gemisch betrieben wird.

3. Verfahren nach Anspruch 2, **dadurch gekennzeichnet, dass** als Reduktionsmittel Kohlenwasserstoffe (HC) und/oder Kohlenmonoxid (CO) zu dem Abgas gegeben werden.

4. Verfahren nach Anspruch 1, **dadurch gekennzeichnet, dass** als Reduktionsmittel Harnstoff zu dem Abgas gegeben wird.

5. Speicherelement, insbesondere Read-Only-Memory oder Flash-Memory, für ein Steuergerät (18) einer Brennkraftmaschine (1) insbesondere eines Kraftfahrzeugs, wobei auf dem Speicherelement ein Programm abgespeichert ist, das auf einem Rechengerät, insbesondere auf einem Mikroprozessor, des Steuergeräts (18) ablauffähig und zur Ausführung eines Verfahrens nach einem der Ansprüche 1 bis 4 programmiert ist.

6. Steuergerät (18) für eine Brennkraftmaschine (1) mit einem in dem Abgas der Brennkraftmaschine (1) angeordneten Katalysator (12), der einen zur Speicherung von Stickoxiden (NOx) fähigen Katalysator (12') und/oder einen zur Speicherung von Sauerstoff fähigen Katalysator (12'') umfasst, wobei das Steuergerät (18) aufweist:
- Mittel zum Beeinflussen der Zusammensetzung des Abgases vor dem Katalysator (12) durch Zugabe von Reduktionsmittel, durch das eine Regeneration des Katalysators (12) gefördert wird,
- Mittel zum Erfassen einer Änderung der Zusammensetzung des Abgases nach dem Katalysator (12) durch Auswerten des Gradienten eines Ausgangssignals (31) eines dem Katalysator (12) nachgeordneten Abgassensors (14) und
- Mittel zum Erfassen eines Zeitverzugs zwischen dem Beginn des Beeinflussens der Zusammensetzung des Abgases vor dem Katalysator (12) und einer Änderung der Zusammensetzung des Abgases nach dem Katalysator (12),
**dadurch gekennzeichnet, dass** das Steuergerät (18) den Stickoxid (NOx)-Katalysator (12') und/oder den Sauerstoff-Katalysator (12'') dann als regeneriert wertet, wenn der Gradient des Ausgangssignals (31) des Abgassensors (14) zunächst einen vorgebbaren ersten Grenzwert überschreitet und dann einen vorgebbaren zweiten Grenzwert unterschreitet.

7. Brennkraftmaschine (1) mit einem in dem Abgas der Brennkraftmaschine (1) angeordneten Katalysator (12), der einen zur Speicherung von Stickoxiden (NOx) fähigen Katalysator (12') und/oder einen zur Speicherung von Sauerstoff fähigen Katalysator (12'') umfasst, mit einem dem Katalysator (12) nachgeordneten Abgassensor (14) und mit einem Steuergerät (18), wobei das Steuergerät (18) aufweist:
- Mittel zum Beeinflussen der Zusammensetzung des Abgases vor dem Katalysator (12) durch Zugabe von Reduktionsmittel, durch das eine Regeneration des Katalysators (12) gefördert wird,
- Mittel zum Erfassen einer Änderung der Zusammensetzung des Abgases nach dem Katalysator (12) durch Auswerten des Gradienten eines Ausgangssignals (31) des Abgassensors (14) und
- Mittel zum Erfassen eines Zeitverzugs zwischen dem Beginn des Beeinflussens der Zusammensetzung des Abgases vor dem Katalysator (12) und einer Änderung der Zusammensetzung des Abgases nach dem Katalysator (12),
**dadurch gekennzeichnet, dass** das Steuergerät (18) den Stickoxid (NOx)-Katalysator (12') und/oder den Sauerstoff-Katalysator (12'') dann als regeneriert wertet, wenn der Gradient des Ausgangssignals (31) des Abgassensors (14) zunächst einen vorgebbaren ersten Grenzwert überschreitet und dann einen vorgebbaren zweiten Grenzwert unterschreitet.

8. Brennkraftmaschine (1) nach Anspruch 7, **dadurch gekennzeichnet, dass** der Abgassensor (14) als ein sauerstoffempfindlicher Sensor ausgebildet ist.

9. Brennkraftmaschine (1) nach Anspruch 7 oder 8, **dadurch gekennzeichnet, dass** der Abgassensor (14) als ein Zweipunkt-Sensor ausgebildet ist.

## Claims

1. Method for operating a catalytic converter (12) which is arranged in the exhaust gas from an internal combustion engine (1) and comprises a catalytic converter (12') which is capable of storing nitrogen oxides (NOx) and/or a catalytic converter (12") which is capable of storing oxygen, the composition of the exhaust gas being influenced upstream of the catalytic converter (12) by the addition of reducing agent, which promotes regeneration of the catalytic converter (12), and the composition of the exhaust gas being recorded with the aid of an exhaust-gas sensor (14) arranged downstream of the catalytic converter (12), and a time delay between the start of influencing of the composition of the exhaust gas upstream of the catalytic converter (12) and the recording of a change in the composition downstream of the catalytic converter (12) being evaluated by evaluation of the gradient of an output signal (31) from the exhaust-gas sensor (14), **characterized in that** the nitrogen oxide (NOx) catalytic converter (12') and/or the oxygen catalytic converter (12") is considered to have been regenerated when the gradient of the output signal (31) from the exhaust-gas sensor (14) first of all exceeds a predeterminable first limit value and then drops below a predeterminable second limit value.

2. Method according to Claim 1, **characterized in that** the internal combustion engine (1) is operated with a rich fuel/air mix in order for the reducing agent to be added to the exhaust gas.

3. Method according to Claim 2, **characterized in that** hydrocarbons (HC) and/or carbon monoxide (CO) are added to the exhaust gas as reducing agent.

4. Method according to Claim 1, **characterized in that** urea is added to the exhaust gas as reducing agent.

5. Memory element, in particular read-only memory or flash memory, for a control unit (18) of an internal combustion engine (1) in particular of a motor vehicle, with a program which can run on a computer unit, in particular on a microprocessor, of the control unit (18) and is programmed to carry out a method according to one of Claims 1 to 4 being stored on the memory element.

6. Control unit (18) for an internal combustion engine (1) having a catalytic converter (12) which is arranged in the exhaust gas from the internal combustion engine (1) and comprises a catalytic converter (12') that is capable of storing nitrogen oxides (NOx) and/or a catalytic converter (12") that is capable of storing oxygen, the control unit (18) including:
- means for influencing the composition of the exhaust gas upstream of the catalytic converter (12) by the addition of reducing agent which promotes regeneration of the catalytic converter (12),
- means for recording a change in the composition of the exhaust gas downstream of the catalytic converter (12) by evaluation of the gradient of an output signal (31) from an exhaust-gas sensor (14) arranged downstream of the catalytic converter (12), and
- means for recording a time delay between the start of influencing of the composition of the exhaust gas upstream of the catalytic converter (12) and a change in the composition of the exhaust gas downstream of the catalytic converter (12),
**characterized in that** the control unit (18) considers the nitrogen oxide (NOx) catalytic converter (12') and/or the oxygen catalytic converter (12") to have been regenerated when the gradient of the output signal (31) from the exhaust-gas sensor (14) first of all exceeds a predeterminable first limit value and then drops below a predeterminable second limit value.

7. Internal combustion engine (1) having a catalytic converter (12) which is arranged in the exhaust gas from the internal combustion engine (1) and comprises a catalytic converter (12') that is capable of storing nitrogen oxides (NOx) and/or a catalytic converter (12") that is capable of storing oxygen, having an exhaust-gas sensor (14) arranged downstream of the catalytic converter (12) and having a control unit (18), the control unit (18) including:
- means for influencing the composition of the exhaust gas upstream of the catalytic converter (12) by the addition of reducing agent which promotes regeneration of the catalytic converter (12),
- means for recording a change in the composition of the exhaust gas downstream of the catalytic converter (12) by evaluation of the gradient of an output signal (31) from the exhaust-gas sensor (14), and
- means for recording a time delay between the start of influencing of the composition of the exhaust gas upstream of the catalytic converter (12) and a change in the composition of the exhaust gas downstream of the catalytic converter (12),
**characterized in that** the control unit (18) considers the nitrogen oxide (NOx) catalytic converter (12') and/or the oxygen catalytic converter (12") to have been regenerated when the gradient of the output signal (31) from the exhaust-gas sensor (14) first of all exceeds a predeterminable first limit value and then drops below a predeterminable second limit value.

8. Internal combustion engine (1) according to Claim 7, **characterized in that** the exhaust-gas sensor (14) is designed as an oxygen-sensitive sensor.

9. Internal combustion engine (1) according to Claim 7 or 8, **characterized in that** the exhaust-gas sensor (14) is designed as a two-point sensor.

## Revendications

1. Procédé pour faire fonctionner un catalyseur (12) disposé dans les gaz d'échappement d'un moteur à combustion interne (1), qui comprend un catalyseur (12') capable d'accumuler des oxydes d'azote (NOₓ) et/ou un catalyseur (12") capable d'accumuler de l'oxygène, selon lequel on influence la composition des gaz d'échappement avant le catalyseur (12) par l'ajout d'agent réducteur, qui favorise une régénération du catalyseur (12), on détecte la composition des gaz d'échappement à l'aide d'un détecteur de gaz d'échappement (14) disposé après le catalyseur (12) et on exploite un retard de temps entre le début de l'action influençant la composition des gaz d'échappement avant le catalyseur (12) et la détection d'une variation de la composition après le catalyseur (12) par traitement du gradient d'un signal de sortie (31) du détecteur de gaz d'échappement (14),
**caractérisé en ce qu'**
on estime que le catalyseur à oxydes d'azote (NOₓ) (12') et/ou le catalyseur à oxygène (12") sont régénérés lorsque le gradient du signal de sortie (31) du détecteur de gaz d'échappement (14) devient d'abord supérieur à une première valeur limite prédéterminable et devient ensuite inférieur à une deuxième valeur limite prédéterminable.

2. Procédé selon la revendication 1,
**caractérisé en ce qu'**
on fait fonctionner le moteur à combustion interne (1) avec un mélange riche de carburant et d'air en vue de l'ajout de l'agent réducteur aux gaz d'échappement.

3. Procédé selon la revendication 2,
**caractérisé en ce que**
comme agent réducteur aux gaz d'échappement on ajoute des hydrocarbures (HC) et/ou du monoxyde de carbone (CO).

4. Procédé selon la revendication 1,
**caractérisé en ce qu'**
on ajoute de l'urée comme agent réducteur aux gaz d'échappement.

5. Elément de mémoire, en particulier mémoire morte (ROM) ou mémoire instantanée, pour un appareil de commande (18) d'un moteur à combustion interne (1), en particulier d'un véhicule automobile, dans lequel on a mémorisé un programme qui peut tourner sur un calculateur, en particulier sur un microprocesseur, de l'appareil de commande (18), pour exécuter un procédé selon l'une quelconque des revendications 1 à 4.

6. Appareil de commande (18) pour un moteur à combustion interne (1) avec un catalyseur (12) disposé dans les gaz d'échappement du moteur à combustion interne (1), qui comprend un catalyseur (12') capable d'accumuler des oxydes d'azote (NOₓ) et/ou un catalyseur (12") capable d'accumuler de l'oxygène, l'appareil de commande (18) présentant :
- des moyens pour influencer la composition des gaz d'échappement avant le catalyseur (12) par l'ajout d'agent réducteur, qui favorise une régénération du catalyseur (12),
- des moyens pour détecter une variation de la composition des gaz d'échappement après le catalyseur (12) par l'exploitation du gradient d'un signal de sortie (31) d'un détecteur de gaz d'échappement (14) disposé après le catalyseur (12), et
- des moyens pour détecter un retard de temps entre le début de l'action influençant la composition des gaz d'échappement avant le catalyseur (12) et une variation de la composition des gaz d'échappement après le catalyseur (12),
**caractérisé en ce que**
l'appareil de commande (18) estime que le catalyseur à oxydes d'azote (NOₓ) (12') et/ou le catalyseur à oxygène (12") sont régénérés, lorsque le gradient du signal de sortie (31) du détecteur de gaz d'échappement (14) devient d'abord supérieur à une première valeur limite prédéterminable et devient ensuite inférieur à une deuxième valeur limite prédéterminable.

7. Moteur à combustion interne (1) avec un catalyseur (12) disposé dans les gaz d'échappement du moteur à combustion interne (1), qui comprend un catalyseur (12') capable d'accumuler des oxydes d'azote (NOₓ) et/ou un catalyseur (12") capable d'accumuler de l'oxygène, avec un détecteur de gaz d'échappement (14) disposé après le catalyseur (12) et avec un appareil de commande (18), qui présente :
- des moyens pour influencer la composition des gaz d'échappement avant le catalyseur (12) par l'ajout d'agent réducteur, qui favorise une régénération du catalyseur (12),
- des moyens pour détecter une variation de la composition des gaz d'échappement après le catalyseur (12) par l'exploitation du gradient d'un signal de sortie (31) d'un détecteur de gaz d'échappement (14) disposé après le catalyseur (12), et
- des moyens pour détecter un retard de temps entre le début de l'action influençant la composition des gaz d'échappement avant le catalyseur (12) et une variation de la composition des gaz d'échappement après le catalyseur (12),
**caractérisé en ce que**
l'appareil de commande (18) estime que le catalyseur à oxydes d'azote (NOₓ) (12') et/ou le catalyseur à oxygène (12") sont régénérés lorsque le gradient du signal de sortie (31) du détecteur de gaz d'échappement (14) devient d'abord supérieur à une première valeur limite prédéterminable et devient ensuite inférieur à une deuxième valeur limite prédéterminable.

8. Moteur à combustion interne (1) selon la revendication 7,
**caractérisé en ce que**
le détecteur de gaz d'échappement (14) est constitué par un détecteur sensible à l'oxygène.

9. Moteur à combustion interne (1) selon la revendication 7 ou 8,
**caractérisé en ce que**
le détecteur de gaz d'échappement (14) est constitué par un détecteur à deux positions.
